# EUROPÄISCHE PATENTSCHRIFT

(11) **EP 1 463 963 B1**
(45) Veröffentlichungstag und Bekanntmachung des Hinweises auf die Patenterteilung: **12.03.2014**
(21) Anmeldenummer: 03701504.7
(22) Anmeldetag: 10.01.2003
(51) Int. Cl.: G02B 1/04, G02B 3/00, C08F 283/12

(54) **VERFAHREN ZUR HERSTELLUNG OPTISCHER ELEMENTE MIT GRADIENTENSTRUKTUR**
METHOD FOR THE PRODUCTION OF OPTICAL ELEMENTS WITH GRADIENT STRUCTURES
PROCEDE DE PRODUCTION D'ELEMENTS OPTIQUES AYANT UNE STRUCTURE EN GRADIENT

(30) Priorität: 10.01.2002 DE 10200648
(43) Veröffentlichungstag der Anmeldung: 06.10.2004
(73) Patentinhaber: Leibniz-Institut für Neue Materialien gemeinnützige GmbH, 66123 Saarbrücken (DE)
(72) Erfinder: DELLWO, Ulrike, 66125 Saarbrücken/Dudweiler (DE); MENNIG, Martin, 66287 Quierschied (DE); OLIVEIRA, Peter, W., 66111 Saarbrücken (DE); SCHMIDT, Helmut, 66130 Saarbrücken-Güdingen (DE); SCHNEIDER, Heike, 66130 Saarbrücken (DE)
(74) Vertreter: Patentanwälte Gierlich & Pischitzis Partnerschaft
(86) Internationale Anmeldenummer: PCT/EP2003/000193
(87) Internationale Veröffentlichungsnummer: WO 2003/058292

(56) Entgegenhaltungen:
- EP-A- 0 414 001
- WO-A-97/38333
- DE-A- 4 133 621
- DE-A- 19 524 859

## Beschreibung

Die vorliegende Erfindung betrifft ein Verfahren zur Herstellung optischer Elemente mit Gradientenstruktur. Die optischen Elemente sind insbesondere für holographische Anwendungen, planare Gradientenindexlinsen in der abbildenden Optik, Head-up-Displays, Head-down-Displays, Lichtwellenleiter, vor allem für die optische Nachrichten- und Übertragungstechnik, und optische Datenspeicher geeignet.

Aus den US-Patenten 5552261 und 5529473 ist bekannt, die Diffusion von Monomeren, die gegenüber einer umgebenden flüssigen Matrix einen erhöhten oder verringerten Brechungsindex aufweisen, zur Erzeugung eines Brechzahlgradienten zu nutzen. Dieser bei Photopolymeren als Colbum-Haines-Effekt bekannte Effekt kann nach anschließender Polymerisation zu einem Produkt mit Brechzahlgradienten führen. Bei organischen Monomeren ist jedoch nur eine geringe Änderung des Brechungsindex und damit ein unzureichender Brechzahlgradient möglich. Daneben sind lange Prozesszeiten erforderlich und es ergeben sich hohe Streuverluste.

In der WO 97/38333 werden optische Bauteile mit Gradientenstruktur bzw. Brechzahlgradient beschrieben, in denen der Gradient durch gerichtete Diffusion von nanoskaligen Teilchen in einer flüssigen Matrixphase aufgrund einer Potentialdifferenz gebildet wird. Der gebildete Gradient wird anschließend durch Polymerisation/Härtung der Matrix fixiert. Hierdurch kann ein ausgeprägter Brechzahlgradient erzeugt werden, jedoch ist der Verfahrensablauf bei der Herstellung definierter optischer Elemente oft sehr aufwendig.

Die erfindungsgemäße Aufgabe bestand darin, ein einfaches, universell anwendbares und kostengünstiges Verfahren zur Herstellung von optischen Elementen mit Gradientenstruktur, insbesondere mit einem Brechzahlgradienten, bereitzustellen.

Erfindungsgemäß wird diese Aufgabe gelöst durch ein Verfahren zur Herstellung von optischen Elementen mit Gradientenstruktur, insbesondere für holographische Anwendungen, planare Gradientenindexlinsen in der abbildenden Optik, Head-up-Displays, Head-down-Displays, Lichtwellenleiter und optische Datenspeicher, die in einer festen Matrix eingebettete nanoskalige Teilchen enthalten, wobei die Gradientenstruktur durch einen Konzentrationsgradienten der nanoskaligen Teilchen gebildet wird.

Die Herstellung dieser optischen Elemente erfolgt dadurch, dass man in einem festen oder gelartigen Nanokompositmaterial aus einem härtbaren Matrixmaterial mit darin dispergierten nanoskaligen Teilchen eine Potentialdifferenz erzeugt, so dass eine gerichtete Diffusion der nanoskaligen Teilchen unter Bildung eines Konzentrationsgradienten erfolgt, und das den Konzentrationsgradienten aufweisende Nanokompositmaterial härtet.

Der Ausdruck "Härtung", wie hier verwendet, schließt Polymerisations-, Polykondensations-, Polyadditions- und andere Vernetzungsreaktionen ein. Unter dem "Konzentrationsgradienten" wird eine Konzentrationsänderung der nanoskaligen Teilchen in einer, zwei oder drei Dimensionen des Matrixmaterials verstanden, die von einer statistischen Verteilung der nanoskaligen Teilchen verschieden ist und z.B. linear, alternierend oder sprunghaft ist und ein ein-, zwei- oder dreidimensionales Muster (z.B. für ein Hologramm) ergibt.

Erfindungsgemäß wurde überraschenderweise festgestellt, dass es möglich ist, eine gerichtete Diffusion von nanoskaligen Teilchen in einem festen oder gelartigen Matrixmaterial unter Ausbildung eines Konzentrationsgradienten zu bewirken. Dies ermöglicht eine einfachere Handhabung der Materialien bei der Herstellung von optischen Elementen.

Es hat sich gezeigt, dass durch eine Potentialdifferenz beliebiger Art eine gerichtete Diffusion (Migration) von nanoskaligen Teilchen in einem festen oder gelartigen, aber noch härtbaren Matrixmaterial zur Herstellung von optischen Elementen mit Gradientenstruktur ausgenutzt werden kann, wenn man das Konzentrationsprofil der nanoskaligen Teilchen nach Bildung durch vorzugsweise thermisches und/oder photochemische Härtung in der Matrixphase fixiert.

Die Potentialdifferenz als treibende Kraft zur gerichteten Diffusion der nanoskaligen Teilchen in der Matrix kann zum Beispiel über ein elektrisches Feld, wie bei der Elektrophorese, über Unterschiede im chemischen Potential (Konzentration von chemischen Stoffen oder chemischen Gruppen) oder im Grenzflächenpotential erzeugt werden.

Soll die Potentialdifierenz über ein elektrisches Feld erzeugt werden, kann man zum Beispiel so vorgeben, dass man das feste oder gelartige, härtbare Matrixmaterial mit darin dispergierten nanoskaligen Teilchen, die eine Oberflächenladung tragen, zwischen zwei Elektroden (Anode und Kathode) bringt und die nanoskaligen Teilchen dadurch veranlaßt, in Richtung der Elektrode zu wandern, die eine zu deren Oberflächenladung entgegengesetzte Polarität aufweist. Die Oberflächenladung auf den nanoskaligen Teilchen kann zum Beispiel durch Einstellung eines pH-Wertes, der eine Dissoziation von auf der Oberfläche der nanoskaligen Teilchen befindlichen Gruppen hervorruft (z.B. COOH zu COO⁻, Metall-OH zu Metall-O⁻), gebildet werden.

Vorzugsweise wird eine chemische Potentialdifferenz erzeugt, beispielsweise analog dem vorstehend beschriebenen Colburn-Haines-Effekt, der auf folgendem Mechanismus beruht: Bei einer lokalen (z.B. thermisch und/oder photochemisch induzierten) Polymerisation oder Polykondensation von Spezies mit polymerisierbaren der polykondensierbaren Gruppen, wie z.B. Kohlenstoff-Kohlenstoff-Mehrfachbiridungen oder Epoxid-Ringen, führt die Polymerisation oder Polykondensation zu einer Verarmung an polymerisierbaren oder polykondensierbaren Gruppen in den Bereichen, in denen die Polymerisation oder Polykondensation stattfindet. Dies führt zu einer Diffusion von Spezies mit noch nicht reagierten polymerisierbaren oder polykondensierbaren Gruppen in die (erwärmten bzw. belichteten) Bereiche, in denen die Polymerisation oder Polykondensation stattgefunden hat, um die chemische Potentialdifferenz auszugleichen. Diese gerichtete Diffusion mit anschließender Härtung führt in den erwärmten bzw. belichteten Bereichen zu einer Erhöhung der Dichte und somit zu einer Erhöhung des Brechwertes. Bei Verwendung von nanoskaligen Teilchen mit polymerisierbaren oder polykondensierbaren Oberflächengruppen kann somit der Brechwertgradient durch Diffusion der nanoskaligen Teilchen aufgrund der chemischen Potentialdifferenz zwischen reagierten und nicht-reagierten Oberflächengruppen deutlich erhöht werden.

Die vorstehend verwendeten Ausdrücke "Polymerisation" und "polymerisierbar" schießen auch die Polyaddition und polyadditionsfähige Gruppen ein.

Die chemische Potentialdifferenz wird vorzugsweise durch Belichtung oder Elektronenbestrahlung, insbesoridere durch holographische oder lithographische Techniken oder über die Maskaligner-Technik, erzeugt. Durch selektive Bestrahlung oder Belichtung des festen oder gelartigen Nanokompositmaterials kann z.B. an lokalen Stellen gezielt eine Polymerisation oder Polykondensation ausgelöst werden, die zu einer chemischen Potentialdifferenz führt, die wiederum zur gerichteten Diffusion der nanoskaligen Teilchen unter Ausbildung eines Konzentrationsgradienten führt.

Für die Belichtungsverfahren werden bevorzugt UV-Licht oder Laserlicht eingesetzt. Bei Verwendung eines Lasers als Lichtquelle können über holographische Techniken sowohl periodische Gitterstrukturen als auch Fresnelstrukturen hergestellt werden. Die durch Interferenz auftretenden Intensitätsprofile wirken als Polymerisationssenken. Für die besonders bevorzugte holographische Belichtung können z.B. mittels Zwei-Wellenmischen phasenmodulierte Volumenhologramme als Transmissions- oder Reflexionshologramme hergestellt werden. Als kohärente Lichtquelle kann z.B. ein Argon-Ionen-Laser dienen.

Die Erzeugung einer Potentialdifferenz aufgrund unterschiedlicher Grenzflächenpotentiale erfolgt vorzugsweise unter Verwendung von nanoskaligen. Teilchen mit hydrophoben Oberflächengruppen, die in einer hydrophile(re)n Matrixphase eingebettet sind, wobei die nanoskaligen Teilchen mit hydrophoben Oberflächengruppen zur Grenzfläche hydrophile(re) Matrixphase/Luft wandern. Eine bevorzugte Ausführungsform dieser Methode unter Verwendung von oberflächenmodifizierten nanoskaligen Teilchen, die zur Ausbildung eines Konzentrationsgradienten in dem festen oder gelartigen Matrixmaterial führt, besteht darin, sich die Inkompatibilität zwischen der Oberfläche der nanoskaligen Teilchen und der Matrixphase zunutze zu machen. Wenn die nanoskaligen Teilchen zum Beispiel an ihrer Oberfläche hydrophobe Gruppen wie fluorierte (Alkyl)gruppen tragen und das Matrixmaterial einen hydrophilen bzw. weniger hydrophoben Charakter aufweist, kann dies dazu führen, dass die hydrophoben Teilchen an die Oberfläche wandern, wodurch die geringste Systemenergie erhalten wird. In der Regel ist dies die Grenzfläche mit der Luft, so dass sich die hydrophoben bzw. hydrophob modifizierten Teilchen an der Oberfläche anreichern und z.B. an der Grenzfläche zum Substrat abreichern, was nach Aushärtung der Beschichtung dazu führt, dass sowohl eine gute Haftung zwischen Schicht und Substrat sichergestellt wird, als auch eine leicht zu reinigende Niederenergie-Oberfläche entsteht.

Um bei dieser Ausführungsform des erfindungsgemäßen Verfahrens vorab eine Entmischung von (hydrophilem) Matrixmaterial und hydrophoben nanoskaligen Teilchen zu vermeiden, kann zum Beispiel so vorgegangen werden, dass man dem Matrixmaterial ein Kompatibilisierungsmittel zusetzt, das später entfernt (z.B. verdampft) wird oder im Verlauf des Härtens stabil in das Matrixmaterial eingebaut wird.

Das erfindungsgemäß eingesetzte feste oder gelartige Nanokompositmaterial, in dem durch Erzeugung einer Potentialdifferenz eine gerichtete Diffusion der nanoskaligen Teilchen unter Bildung des Konzentrationsgradienten hervorgerufen wird, besitzt im allgemeinen eine dynamische Viskosität bei 25°C von 2 bis 1.000 Pas, bevorzugt 5 bis 500 Pas und besonders bevorzugt von 10 bis 100 Pas.

Das Matrixmaterial, in dem die nanoskaligen Teilchen dispergiert werden, kann prinzipiell jede beliebige Spezies umfassen, die sich als Matrixmaterial eignet und in eine feste oder gelartige Phase überführt werden kann, die noch härtbar ist. Als Matrixmaterial können insbesondere die Materialien verwendet werden, die in WO 97/38333 für die Herstellung der Matrixphase beschrieben sind, worauf hiermit ausdrücklich Bezug genommen wird. Vorzugsweise erfolgt die Härtung des Matrixmaterials thermisch und/oder photochemisch.

Das Matrixmaterial kann ein polymerisierbares oder polykondensierbares organisches Monomer, Oligomer und/oder Prepolymer, ein organisches Polymer und/oder ein Kondensat aus einer oder mehreren hydrolysierbaren, gegebenenfalls organisch modifizierten anorganischen Verbindungen umfassen. Das Matrixmaterial umfaßt bevorzugt mindestens ein organisches Polymer und/oder ein Kondensat aus einem oder mehreren hydrolysierbaren und kondensierbaren Silanen.

Bei den organischen Polymeren, die im Matrixmaterial enthalten sein können, kann es sich um beliebige bekannte Kunststoffe handeln, z.B. Polyacrylsäure, Polymethacrylsäure, Polyacrylate, Polymethacrylate, Polyolefine, Polystyrol, Polyamide, Polyimide, Polyvinyl-Verbindungen wie Polyvinylchlorid, Polyvinylalkohol, Polyvinylbutyral, Polyvinylacetat und entsprechende Copolymere, z.B. Poly(ethylen-vinylacetat), Polyester, z.B. Polyethylenterephthalat oder Polydiallylphthalat, Polyarylate, Polycarbonate, Polyether, z.B. Polyoxymethylen, Polyethylenoxid und Polyphenylenoxid, Polyetherketone, Polysulfone, Polyepoxide, Fluorpolymere, z.B. Polytetrafluorethylen, und Organopolysiloxane. Vorzugsweise handelt es sich um transparente Polymere.

Besonders bevorzugt werden organische Polymere eingesetzt, die in einem organischen Lösungsmittel löslich sind. Beispiele sind Polyacrylsäure, Polymethacrylsäure, Polyacrylate, Polymethacrylate, Polyepoxide, Polyvinylalkohol, Polyvinylacetat oder Polyvinylbutyral.

Als organisches Lösungsmittel kommen vorzugsweise Alkohole, wie Ethanol, Isopropanol oder Butanol, Ketone wie Aceton, Ester wie Ethylacetat, Ether wie Tetrahydrofuran und aliphatische, aromatische und halogenierte Kohlenwasserstoffe, wie Hexan, Benzol, Toluol und Chloroform, in Betracht. Diese Lösungsmittel können für die Herstellung des Matrixmaterials verwendet werden.

Gegebenenfalls kann ein polymerisierbares oder polykondensierbares Monomer, Oligomer oder Prepolymer, das bei einer thermisch oder photochemisch induzierten Polymerisation oder bei einer (gegebenenfalls Säure- oder Basenkatalysierten) Polykondensation eines der oben genannten Polymeren ergibt, für das Matrixmaterial verwendet werden. Die Oligomere und Prepolymere leiten sich von den entsprechenden Monomeren ab.

Spezielle Beispiele für polymerisierbare oder polykondensierbare Monomere sind (Meth)acrylsäure, (Meth)acrylsäureester, (Meth)acrylnitril, Styrol und Styrol-Derivate, Alkene (z.B. Ethylen, Propylen, Buten, Isobuten), halogenierte Alkene (z.B. Tetrafluorethylen, Chlortrifluorethylen, Venylchlorid, Vinylfluorid, Vinylidenfluorid, vnylidenchlorid), Vinylacetat, Vinylpyrrolidon, Vinylcarbazol und Mischungen davon. Auch mehrfach ungesättigte Monomere können vorhanden sein, z.B. Butadien und (Meth)acrylsäureester von Polyolen (z.B. Diolen).

Bevorzugt sind Acrylate oder Methacrylate, insbesondere Methylmethacrylat, ein Diol(meth)acrylat oder ein Diol-di(meth)acrylat, wie z.B. Hexandioldimethacrylat, Hexandioldiacrylat, Dodecandioldimethacrylat und Dodecandioldiacrylat.

Zusätzlich zu den oder anstelle der genannten organischen Materialien kann das Matrixmaterial auch ein Kondensat aus anorganischen oder organisch modifizierten anorganischen hydrolysierbaren Verbindungen enthalten. Dies können z.B. hydrolysierbare und kondensierbare Verbindungen von Si, Al, B, Pb, Sn, Ti, Zr, V und Zn, insbesondere solche von Si, Al⁻, Ti und Zr oder Mischungen davon, sein.

Besonders bevorzugte Matrixmaterialien sind Polykondensate aus einem oder mehreren hydrolysierbaren und kondensierbaren Silanen, wobei gegebenenfalls mindestens ein Silan einen nicht hydrolysierbaren Rest, der polymerisierbar oder polykondensierbar ist, aufweist. Besonders bevorzugt werden ein oder mehrere Silane mit den folgenden allgemeinen Formeln (I) und/oder (II) verwendet:

SiX₄ (I)

worin die Reste X gleich oder verschieden sind und hydrolysierbare Gruppen oder Hydroxygruppen bedeuten,

RaSiX₍₄₋ₐ₎ (II)

worin R gleich oder verschieden ist und einen nicht hydrolysierbaren Rest darstellt, der gegebenenfalls eine polymerisierbare oder polykondensierbare Gruppe aufweist, X die vorstehende Bedeutung hat und a den Wert 1, 2 oder 3, vorzugsweise 1 oder 2, hat.

In den obigen Formeln sind die hydrolysierbaren Gruppen X beispielsweise Wasserstoff oder Halogen (F, Cl, Br oder I), Alkoxy.(vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen in der bzw. den Alkylgruppe(n).

Der nicht hydrolysierbare Rest R ist beispielsweise Alkyl (vorzugsweise C₁₋₆-Alkyl, wie z.B. Methyl, Ethyl, n-Propyl, Isopropyl, n-Butyl, s-Butyl und t-Butyl, Pentyl, Hexyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀Aryl, wie z.B. Phenyl und Naphthyl). Die genannten Reste R und X können gegebenenfalls einen oder mehrere übliche Substituenten, wie z.B. Halogen, Ether-, Phosphorsäure-, Sulfonsäure-, Cyano-, Amid-, Mercapto-, Thioether- oder Alkoxygruppen, als funktionelle Gruppen aufweisen.

Der Rest R kann eine polymerisierbare oder polykondensierbare Gruppe enthalten. Hierzu gehören auch die obigen Alkenyl- und Alkinylgruppen. Konkrete Beispiele für die polymerisierbaren oder polykondensierbaren Gruppen des Restes R sind Epoxyd Hydroxy-, Amino-, Monoalkylamino-, Dialkylamino-, Carboxy-, Allyl-, Vinyl-, Acryl-, Acryloxy-, Methacryl-; Methacryloxy-, Cyano-, Aldehyd- und Alkylcarbonylgruppen. Diese Gruppen sind vorzugsweise über Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich zum Beispiel von den oben genannten Alkyl-, Alkenyl- oder Arylresten ab. Die Brückengruppen der Reste R enthalten vorzugsweise 1 bis 18, insbesondere 1 bis 8 Kohlenstoffatome.

Besonders bevorzugte hydrolysierbare Silane der allgemeinen Formel (I) sind Tetraalkoxysilane, wie Tetraethoxysilan (TEOS) und Tetramethoxysilan. Besonders bevorzugte Organosilane der allgemeinen Formel (II) sind Epoxysilane wie 3-Glycidyloxypropyltrimethoxysilan (GPTS) und über reaktive polymerisierbare Doppelbindungen verfügende Silane, wie Vinyltriethoxysilan, Methacryloxypropyltrimethoxysilan und Acryloxypropyltrimethoxysilan. Weitere bevorzugt verwendete Silane sind Dimethyldimethoxysilan, Dimethyldiethoxysilan oder Methyltriethoxysilan. Bevorzugt werden Kombinationen von Silanen mit einem nicht hydrolysierbaren Rest mit polymerisierbarer oder polykondensierbarer Gruppe und einem weiteren Silan, das keine polymerisierbare oder polykondensierbare Gruppe aufweist, eingesetzt.

Es können natürlich auch ein oder mehrere Silane verwendet werden, die 1 oder 2 nicht hydrolysierbare Reste ohne polymerisierbare oder polykondensierbare Gruppen und 1 oder 2 nicht hydrolysierbare Reste mit polymerisierbaren oder polykondensierbaren Gruppen aufweisen, wobei insgesamt nicht mehr als 3 nicht hydrolysierbare Reste am Si gebunden sind.

Es wird bevorzugt mindestens ein Silan eingesetzt, das einen nicht hydrolysierbaren Rest mit einer polymerisierbaren oder polykondensierbaren Gruppe aufweist. Über diese Gruppen kann, gegebenenfalls zusammen mit ebenfalls eingesetzten polymerisierbaren oder polykondensierbaren organischen Monomeren, Oligomeren und/oder Prepolymeren, eine Polymerisation oder Polykondensation bzw. eine Vernetzung des Matrixmaterials erfolgen. Außerdem können diese polymerisierbaren oder polykondensierbaren Gruppen des Restes R auch mit an der Oberfläche der nanoskaligen Teilchen befindlichen reaktiven Gruppen reagieren und somit zur Immobilisierung (z.B. durch Einbindung in ein Netzwerk) der nanoskaligen Teilchen beitragen.

Zur Unterscheidung vom anorganischen Kondensationsgrad, der sich durch Hydrolyse und Kondensation der hydrolysierbaren anorganischen Verbindungen, z.B. unter Bildung von Si-O-Si-Brücken, ergibt, wird das Ausmaß der Verknüpfung über die polymerisierbaren oder polykondensierbaren Gruppen der nicht hydrolysierbaren Reste der hydrolysierbaren Verbindungen im folgenden als organischer Polymerisations- oder Polykondensationsgrad bezeichnet.

Die Hydrolyse und Polykondensation der obigen Verbindungen werden auf herkömmliche Art und Weise durchgeführt, gegebenenfalls in Gegenwart eines Löungsmittels und eines sauren oder basischen Kondensationskatalysators wie HCl, HNO₃ oder NH₃. So können Hydrolyse und Polykondensation beispielsweise unter den (allgemein bekannten) Bedingungen des Sol-Gel-Prozesses erfolgen. Zur Herstellung des festen oder gelartige, aber noch härtbaren Matrixmaterials wird bevorzugt mit einer unterstöchiometrischen Menge Wasser, z.B: mit der 0,3 bis 0,9-fachen stöchiometrischen Menge, hydrolysiert. Die Kondensation erfolgt bevorzugt bei einer Temperatur von 5 bis 40°C.

Das feste oder gelartige, aber noch härtbare Matrixmaterial enthält vorzugsweise ein Kondensat mit einem anorganischen Kondensationsgrad von 33 bis 100 % und einem organischen Polymerisations- oder Polykondensationsgrad von 0 bis 95% auf. Ein anorganischer Kondensationsgrad von 33% bedeutet beispielsweise, dass im Durchschnitt einer von drei hydrolysierbaren Resten unter Bildung einer anorganischen Brücke wie Si-O-Si kondensiert ist. Der organische Polymerisations- oder Polykondensationsgrad gibt an, wieviele polymerisierbare oder polykondensierbare Gruppen in den nicht hydrolysierbaren Reste über eine Polymerisations- oder Polykondensationsreaktion umgesetzt wurden, ein organischer Polymerisations- oder Polykondensationsgrad von 95% bedeutet z.B., dass 95% aller polymerisierbaren oder polykondensierbaren Gruppen in den nicht hydrolysierbaren Resten polymerisiert oder polykondensiert sind.

Sofern die polymerisierbare oder polykondensierbare Gruppe eine olefinische Doppelbindung enthält, kann der Umsatz über IR-Spektroskopie beobachtet werden. Eine Polykondensation kann z.B. bei Epoxidgruppen durch saure oder basische Katalyse bewirkt werden. Gruppen mit olefinischen Doppelbindungen können z.B. mittels UV-Belichtung polymerisiert werden.

Die im erfindungsgemäßen Verfahren einsetzbaren nanoskaligen Teilchen weisen vorzugsweise einen Durchmesser von nicht mehr als 100 nm, insbesondere nicht mehr als 50 nm und besonders bevorzugt nicht mehr als 20 nm auf. Hinsichtlich der Untergrenze gibt es keine besonderen Beschränkungen, wenngleich diese Untergrenze aus praktischen Gründen in der Regel bei 0,5 nm, insbesondere 1 nm und häufiger 4 nm liegt. Der Brechungsindex hängt von der Art der Teilchen ab und ist dem Fachmann bekannt

Die nanoskaligen Teilchen sind insbesondere anorganische Teilchen, und umfassen zum Beispiel Oxide, wie ZnO, CdO, Si0₂, TiO₂, ZrO₂, CeO₂, SnO₂, Al₂O₃, In₂O₃, La₂O₃, Fe₂O₃, Ta₂O₅, Cu₂O, V₂O₅, MoO₃ oder WO₃; Chalkogenide, z.B. Sulfide, wie CdS, ZnS, PbS oder Ag₂S; Selenide, wie GaSe, CdSe oder ZnSe; und Telluride, wie ZnTe oder CdTe; Halogenide, wie AgCl, AgBr, Agl, CuCl, CuBr, Cdl₂ oder Pbl₂; Carbide, wie CdC₂ oder SiC; Arsenide, wie AlAs, GaAs oder GeAs; Antimonide wie InSb; Nitride, wie BN, AIN, Si₃N₄ oder Ti₃N₄; Phosphide, wie GaP, InP, Zn₃P₂ oder Cd₃P₂; Phosphate; Silicate; Zirkonate; Aluminate; Stannate; und entsprechende Mischoxide, z.B. solche mit Perowskitstruktur, wie BaTiO₃ oder PbTiO₃.

Die Herstellung dieser nanoskaligen Teilchen kann auf übliche Weise erfolgen, z.B. durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren. Die Herstellung der nanoskaligen Teilchen kann auch in situ in Anwesenheit des noch flüssigen Matrixmaterials (oder Teilen davon) erfolgen, beispielsweise unter Verwendung von Sol-Gel-Prozessen. Diese Verfahren sind in der Literatur ausführlich beschrieben.

Bevorzugt werden oberflächenmodifizierte nanoskalige Teilchen verwendet. Auch die gegebenenfalls vorgenommene Modifizierung der Oberfläche der nanoskaligen Teilchen mit geeigneten funktionellen Gruppen (z.B. polymerisierbaren oder hydrophoben Gruppen) ist z.B. aus der DE-A-19719948 oder DE-A-19746885 und EP-B-636111 bekannt.

Die Herstellung von oberflächenmodifizierten nanoskaligen Teilchen kann prinzipiell auf zwei verschiedenen Wegen durchgeführt werden, nämlich zum einen durch Oberflächenmodifizierung von bereits hergestellten nanoskaligen anorganischen Feststoffteilchen und zum anderen durch Herstellung dieser anorganischen nanoskaligen Feststoffteilchen unter Verwendung von einer oder mehreren Verbindungen, die für die Oberflächenmodifizierung geeignet sind. Für die Oberftächenmodifizierung direkt bei Herstellung der Teilchen eignen sich auch alle nachstehend genannten Verbindungen für eine anschließende Oberflächenmodifizierung.

Wird eine Oberflächenmodifizierung bereits hergestellter nanoskaliger Teilchen durchgeführt, eignen sich zu diesem Zweck alle Verbindungen (bevorzugt mit einem Molekulargewicht unter 300 und insbesondere unter 200), die über eine oder mehrere Gruppen verfügen, die mit auf der Oberfläche der nanoskaligen Feststoffteilchen vorhandenen (funktionellen) Gruppen (wie beispielsweise OH-Gruppen im Falle von Oxiden) reagieren oder zumindest wechselwirken können. Bevorzugt wird die Ausbildung von kovalenten und/oder koordinativen Bindungen. Konkrete Beispiele für zur Oberflächenmodifizierung der nanoskaligen anorganischen Feststoffteilchen heranziehbare organische Verbindungen sind beispielsweise gesättigte oder ungesättigte Carbonsäuren, wie (Meth)acrylsäure, ß-Dicarbonyl-Verbindungen (z.B. gesättigte oder ungesättigte ß-Diketone oder ß-Carbonylcarbonsäuren), Alkohole, Amine, Epoxide und dergleichen.

Erfindungsgemäß besonders bevorzugt wird die Oberflächenmodifizierung mit hydrolytisch kondensierbaren Silanen mit mindestens (und vorzugsweise) einem nicht hydrolysierbaren Rest durchgeführt. Hierfür eignen sich z.B. die vorstehend genannten hydrolysierbaren Silane der Formel (II), bevorzugt solche mit einer (Meth)acrylgruppe. Erfindungsgemäß besonders bevorzugt ist der Einsatz von oberflächenmodifizierten Teilchen, die eine polymerisierbare oder polykondensierbare Gruppe an der Oberfläche aufweisen. Besonders bevorzugt handelt es sich dabei um (Meth)acryl-, Allyl-, Vinyl-, Epoxy-, Hydroxy-, Carboxy- oder Aminogruppen.

Das Nanokompositmaterial kann auch für optisches Systeme übliche Additive enthalten. Beispiele sind Weichmacher, thermische oder photochemische Vernetzungsinitiatoren, Sensibilisierungsmittel, Netzhilfsmittel, Haftvermittler, Verlaufsmittel, Antioxidationsmittel, Stabilisatoren, Farbstoffe und photochrome oder thermochrome Verbindungen.

Das Nanokompositmaterial, insbesondere eine noch flüssige Vorstufe zur Herstellung des festen oder gelartigen Nanokompositmaterials, kann vor der Härtung auch ein oder mehrere Lösungsmittel enthalten. Das feste oder gelartige Nanokompositmaterial kann zweckmäßigerweise einen Restanteil von 0 bis 15 Gew.-%, insbesondere 2 bis 12 Gew.-%, Lösungsmittel enthalten. Beispiele für einsetzbare Lösungsmittel sind vorstehend aufgeführt. Ein anderes Lösungsmittel ist Wasser. Wenn ein organisches Polymer eingesetzt wird, wird bevorzugt ein Lösungsmittel verwendet, in dem dieses Polymer löslich ist.

Als Weichmacher können z.B. Verbindungen verwendet werden, die gemäß DIN 55945 (Dezember 1988) elastifizierende oder weichmachende Eigenschaften haben. Bevorzugt handelt es sich um Ester. Besonders bevorzugt sind Weichmacher aus der Gruppe der acyclischen aliphatischen Dicarbonsäureester, z.B. Ester der Adipinsäure wie Di-n-octyladipat, Bis(2-ethylhexyl)adipat, Diisodecyladipat, Dibutylsebacat, Dioctylsebacat und Bis(2-ethylhexyl)sebacat; Ester aus C₆-C₁₂-Dicarbonsäuren mit Polyalkylenglycolen, z.B. Triethylenglycolbis(n-heptanoat), Triethylenglycol-bis(2-ethylhexanoat), Triethylenglycol-bis-(isononaoat); Ester aus C₆-C₁₂-Carbonsäuren mit Polyalkylenglycolen, z.B. Triethylen-glycol-bis(2-ethylbutyrat); Diester aus (Meth)acrylsäure und Polyalkylenglycolen, wie Polypropylenglycoldiacrylat oder -dimethacrylat, Polyethylenglycoldiacrylat oder -dimethacrylat, beispielsweise Tetraethylenglycoldi(meth)acrylat.

Als Katalysatoren/Initiatoren bzw. Vemetzungsinitiator kommen alle geläufigen und dem Fachmann bekannten Starter/Startsysteme in Frage, einschließlich radikalischer Photostarter, radikalischer Thermostarter, kationischer Photostarter, kationischer Thermostarter und beliebiger Kombinationen derselben. Unter bestimmten Umständen kann ganz auf den Vernetzungsinitiator verzichtet werden, wie z.B. gegebenenfalls im Fall von Elektronenstrahl- oder Laserhärtung.

Konkrete Beispiele für einsetzbare radikalische Photostarter sind Irgacure^{®} 184 (1-Hydroxycyclohexylphenylketon), Irgacure^{®} 500 (1-Hydroxycyclohexylphenylketon, Benzophenon) und andere von der Firma Ciba-Geigy erhältliche Photoinitiatoren vom Irgacure^{®}-Typ, Darocur^{®} 1173, 1116, 1398, 1174 und 1020 (Fa. Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Beispiele für radikalische Thermostarter sind bevorzugt organische Peroxide in Form von Diacylperoxiden, Peroxydicarbonaten, Alkylperestem, Alkylperoxiden, Dialkylperoxiden, Perketalen, Ketonperoxiden und Alkylhydroperoxiden sowie Azo-Verbindungen. Als konkrete Beispiele wären hier insbesondere Dibenzoylperoxid, tert-Butylperbenzoat und Azobisisobutyronitril zu nennen. Ein Beispiel für einen kationischen Photostarter ist Cyracure^{®} UVI-6974, während ein bevorzugter kationischer Thermostarter 1-Methylimidazol ist.

Die Polykondensation induzierende Katalysatoren sind z.B. Brönsted-Säuren und -Basen, wie Mineralsäuren oder tertiäre Amine, für die anionische Polykondensation und Lewis-Säuren, wie Metallalkoholate (z.B. Aluminiumalkoholate im Falle von Epoxysilanen), für die kationische Polykondensation. Bei Beteiligung von Epoxidgruppen (z.B. an der Aushärtung der Matrixphase) ist der Zusatz von Ringöffnungskatalysatoren wie beispielsweise N-Alkylimidazolen von besonderem Vorteil.

Beispiele für Verlaufsmittel sind Polyether-modifizierte Dimethylpolysiloxane wie Byk® 306. Beispiele für Sensibilisierungsmittel sind Amin-modifizierte Oligoetheracrylate wie Crodamere®.

Das feste oder gelartigen Nanokompositmaterial umfaßt vorzugsweise, bezogen auf das Gesamttrockengewicht des Nanokompositmaterials, 4,9 bis 95,9 Gew.-% organisches Polymer, 4 bis 95 Gew.-% eines gegebenenfalls organisch modifizierten anorganischen Kondensats aus hydrolysierbaren und kondensierbaren Verbindungen und 0,1 bis 50 Gew.%, häufiger 1 bis 50 Gew.-% und bevorzugt 5 bis 30 Gew.-% nanoskalige Teilchen. Das feste oder gelartige Nanokompositmaterial kann, bezogen auf das Gesamttrockengewicht des Nanokompositmaterials, ferner 0 bis 60 Gew.-% eines organischen Monomers, Oligomers oder Prepolymers, 0 bis 50 Gew.-%, bevorzugt 0,1 bis 30 Gew.-% eines Weichmachers und 0 bis 5 Gew.% zusätzlicher Additive enthalten.

Die Komponenten zur Herstellung des Nanokompositmaterials können in beliebiger Weise und Reihenfolge miteinander gemischt werden. Zur Herstellung des festen oder gelartigen Nanokompositmaterials wird vorzugsweise zunächst eine flüssige Vorstufe, die das Matrixmaterial oder eine Vorstufe davon und die darin dispergierten nanoskaligen Teilchen umfaßt, hergestellt. Dabei geht man z.B. so vor, dass man entweder
(a) die bereits hergestellten nanoskaligen Teilchen in einer die Matrix bildende(n) Komponente(n) enthaltenden Lösung dispergiert und anschließend gegebenenfalls Lösungsmittel zumindest teilweise entfernt,
(b) das Matrixmaterial in Anwesenheit der nanoskaligen Teilchen erzeugt oder
(c) die nanoskaligen Teilchen in Anwesenheit des Matrixmaterials erzeugt.

Sofern das Matrixmaterial das bevorzugt eingesetzte Kondensat aus hydrolysierbaren Verbindungen umfaßt, wird dieses wie oben beschrieben durch Hydrolyse und Kondensation der hydrolysierbaren Verbindungen und gegebenenfalls Polymerisation und Polykondensation vorhandener polymerisierbarer oder polykondensierbarer Gruppen an nicht hydrolysierbaren Resten hergestellt. Gegebenenfalls zusätzlich eingesetztes organisches Polymer und/oder organisches Monomer, Oligomer oder Prepolymer, die ebenfalls zumindest teilweise polymerisiert oder polykondensiert werden können, werden anschließend oder im Verlauf der Hydrolyse und Kondensation zugegeben, wobei insbesondere das organische Polymer vorzugsweise in einem organischen Lösungsmittel gelöst ist. Natürlich können die anorganischen Matrixkomponenten auch umgekehrt zu den organischen Matrixkomponenten gegeben werden.

Die nanoskaligen Teilchen und gegebenenfalls zugegebene Additive können zu jedem beliebigen Zeitpunkt zugegeben werden, wobei die Zugabe der nanoskaligen Teilchen nach einer der obigen Varianten (a), (b) oder (c) erfolgen kann. Die nanoskaligen Teilchen können z.B. als Suspension in einem Lösungsmittel, das zweckmäßigerweise mit dem Lösungsmittel des organischen Polymers kompatibel ist, mit den Matrixkomponenten (z.B. Kondensat oder Vorkondensat und organisches Polymer) gemischt werden (Varianten (a), (b)). Die Nanopartikel können auch in situ durch Hydrolyse und Kondensation entsprechender Vorstufen in einem teilkondensierten Vorkondensat der hydrolysierbaren Verbindungen und/oder dem gelösten organischen Polymer hergestellt werden.

Man erhält bevorzugt eine noch flüssige Vorstufe des Nanokompositmaterials, worin die nanoskaligen Teilchen in der flüssigen Matrixphase dispergiert sind. Der anorganische Kondensationsgrad und der organische Polymerisations- oder Polykondensationsgrad des Kondensats in der flüssigen Vorstufe kann denen im festen oder gelartigen Nanokompositmaterial entsprechen oder darunterliegen. Das Verfestigen oder Gelieren des Nanokompositmaterials kann z.B. durch Abdampfen von Lösungsmittel, zweckmäßigerweise auf einen Restanteil von 0 bis 15 Gew.-%, insbesondere 2 bis 12 Gew.-%, und/oder Erhöhung des anorganischen Kondensationsgrads und/oder des organischen Polymerisations- oder Polykondensationsgrads erfolgen.

Das feste oder gelartige, aber noch härtbare Nanokompositmaterial oder eine flüssige Vorstufe davon wird dann vorzugsweise in die für das beabsichtigte optische Element notwendige Struktur überführt. Dies kann z.B. dadurch erfolgen, dass man das Nanokompositmaterial in eine Form gibt, um einen Formkörper herzustellen, das Nanokompositmaterial auf ein Substrat unter Bildung einer Beschichtung aufbringt oder ein Verbundsystem aus mehreren Komponenten bildet, von denen mindestens eine aus dem Nanokompositmaterials besteht. Es versteht sich, dass für diese Strukturierung meistens eine flüssige Vorstufe des Nanokompositmaterials zweckmäßiger ist. Das Nanokompositmaterial wird dann nach der Formung, Beschichtung oder Zusammenstellung des beabsichtigten optischen Elements in das feste oder gelartige Nanokompositmaterial überführt.

Zur Herstellung von Formkörpern kann man die flüssige Vorstufe zum Beispiel in geeignete Formen eingießen und dann in die feste oder gelartige Form überführen.

Für die Beschichtung werden vorzugsweise für optische Anwendungen geeignete Substrate ausgewählt, wie beispielsweise Glas, Keramik, Silicium, Metall, Halbleiter-Materialien oder (vorzugsweise transparente) Kunststoffe, wie PET, PE und PP. Ein besonders bevorzugtes Substrat ist eine Kunststoffolie. Die Beschichtung kann nach üblichen Methoden erfolgen, z.B. durch Tauchen, Fluten, Rakeln, Gießen, Schleudern, Spritzen, Aufstreichen, Slot-Coating, Meniskus-Coating, Foliengießen, Spinnen oder Sprühen. Hierfür eignen sich natürlich flüssige Vorstufen des Nanokompositmaterials, wobei die erforderliche Viskosität durch Zugabe oder Entfernen von Lösungsmittel eingestellt werden kann. Bevorzugte Schichtdicken (im gehärteten Zustand) liegen bei 0,2 bis 100 µm. Anschließend wird gewöhnlich zumindest ein Teil des Lösungsmittels verdampft, um das Nanokompositmaterial in die feste oder gelartige Form zu überführen.

Bei einer bevorzugten Ausführungsform wird das Nanokompositmaterial auf eine transparente Kunststoffolie aufgetragen und in die feste oder gelartige Form überführt, die geeigneterweise einen Lösungsmittelrestgehalt von nicht mehr als 15 Gew.-% aufweist, und anschließend wird eine zweite Kunststoffolie als Schutzfolie auflaminiert. In dieser Form kann das Folienmaterial aufgewickelt, lichtgeschützt und klimatisiert (15 bis 30°C) zwischengelagert werden. Auf diese Weise kann auch ein Folienverbund bzw. -komposit hergestellt werden. Folien mit einer Beschichtung, die einen Brechzahlgradienten aufweist, auf die gegebenenfalls eine zweite Folie auflaminiert wurde (Folienkomposit) sind bevorzugte erfindungsgemäße optische Elemente.

Anschließend wird in dem festen oder gelartigen Nanokompositmaterial auf die oben beschriebene Weise eine Potentialdifferenz erzeugt, so dass durch gerichtete Diffusion der nanoskaligen Teilchen ein Konzentrationsgradient gebildet wird. Die Potentialdifferenz wird bevorzugt durch ein Belichtungsverfahren erzeugt. Die sich bei Erzeugung einer Potentialdifferenz abspielenden Vorgänge werden nachstehend für eine bevorzugte Ausführungsform erläutert.

Durch eine relativ intensive lokale Belichtung vernetzen Nanopartikel mit polymerisierbaren Gruppen miteinander und/oder mit polymerisierbaren Gruppen aus der teilkondensierten Silankomponente der festen oder gelierten Matrix, so dass ein chemischer Potentialgradient für Nanopartikel mit polymerisierbaren Gruppen an ihrer Oberfläche zu unbelichteten Nachbarregion gebildet wird. Aus dieser Nachbarregion diffundieren weitere Nanopartikel in die belichtete Region. Dieser Prozeß kann während und nach der Belichtung erfolgen und dauert zwischen wenigen Sekunden bis wenige Minuten, je nach Belichtungsbedingungen und Temperatur. Durch den Brechzahlunterschied zwischen den Nanopartikeln und der Matrix entsteht auf diese Weise ein lokaler Brechzahlgradient.

Nach der durch eine Potentialdifferenz bewirkten Einstellung des Konzentrationsgradienten der nanoskaligen Teilchen wird das Nanokompositmaterial gehärtet, d.h. vollständig polymerisiert und/oder polykondensiert (vemetzt). Dabei wird eventuell vorhandenes Lösungsmittel entfernt. In Abhängigkeit von der Art der gegebenenfalls verwendeten Vernetzungsinitiatoren und der Art der für die Matrixphase eingesetzten Komponenten kann thermisch und/oder durch Bestrahlung (z.B. mit einem UV-Strahler oder Laser) gehärtet werden. Die Härtungsbedingungen (Temperatur, UV-Wellenlänge etc.) richten sich im Fall der Polymerisation ungesättigter Gruppen nach den Zerfallsbedingungen des Polymerisationsinitiators. Die thermische Härtung erfolgt gewöhnlich bei Temperaturen unter 150°C. Sind lediglich anorganische Komponenten an der Härtung der Matrixphase beteiligt, kann die Hydrolyse und Kondensation auch bei höheren Temperaturen (z.B. bis zu 500°C) durchgeführt werden. Durch die Härtung wird der Konzentrationsgradient fixiert.

Das erfindungsgemäße Verfahren eignet sich insbesondere zur Herstellung von optischen Elementen mit einem Brechzahlgradienten. Die optischen Elemente sind insbesondere als holographische Anwendungen, planare Gradientenindexlinsen in der abbildenden Optik, Head-up-Displays, Head-down-Displays, Lichtwellenleiter, vor allem in der optischen Nachrichten- und Übertragungstechnik, und optische Datenspeicher geeignet. Beispiele für herstellbare optische Elemente sind Sicherheitshologramme, Bildhologramme, digitale Hologramme zur Informationsspeicherung, Systeme mit Komponenten, die Lichtwellenfronten verarbeiten, planare Wellenleiter, Strahlteiler und Linsen.

In den nachfolgenden Beispielen wird als Maß für die erreichte Brechwertmodulation der "angle of view" gemessen. Hierbei wird die Lumineszenz eines auf einem Substrat aufgetragenen Nanokompositmaterials nach der Partikelmigration und vollständigen Aushärtung der Matrix (Einfrieren des Brechzahlgradienten) in 1°-Schritten (Winkel α -30° bis +30°) mit einem Lumineszenzmeter vermessen (60° zur Zentralachse). Der "angle of view" entspricht der Halbwertsbreite I/2 einer Auftragung der Intensität I [%] gegen den Winkel α Je höher der "angle of view", desto höher die Streukraft des Materials. Angestrebt werden Werte über 10°.

### BEISPIEL 1

a) Herstellung von Zr(OPr)₄/MAS (1:1):
   In einem 250 ml Dreihalskolben werden 65,4 g (0,20 mol) Zirkoniumtetrapropoxid Zr(OPr)₄ vorgelegt und im Eisbad gekühlt. Dazu tropft man langsam (15 min) unter Rühren 17,2 g (0,20 mol) Methacrylsäure (MAS) hinzu. Nach vollständiger Zugabe wird das Reaktionsgemisch nach 10 min aus dem Eisbad entfernt und anschließend bei 25°C gerührt.
b) Herstellung einer Silan-PVB-Mischung:
   Zu 49,6 g (0,20 mol) Methacryloxypropyltrimethoxysilan (MPTS) gibt man 24 g (0,20 mol) Dimethyldimethoxysilan (DMDS) und rührt 5 min bei 25°C. Nach Zugabe von 9,05 g 0,1 N HCl werden weitere 10 min bei 25°C gerührt, bis das Reaktionsgemisch aufklart. Anschließend werden 49,92 g Polyvinylbutyral (PVB) (30 gew.-%ige Lösung in 2-Propanol) zugegeben und 5 min bei 25°C gerührt.
c) Herstellung der Matrix
   Man fügt 22,27 g der in a) hergestellten Zr(OPr)₄/MAS-Nanopartikel unter Rühren langsam zur Mischung b) hinzu. Nach vollständiger Zugabe lässt man 4 Stunden bei 25°C rühren und tropft 1,08 g (0,06 mol) Wasser zu. Nach Rühren über Nacht bei 25°C werden 6,2 g Dodecandioldimethacrylat (DDDMA) und 1,6 g des Photostarters Irgacure^{®} 184 zugegeben.

### BEISPIELE 2 bis 4

a) Die Herstellung von Zr(OPr)₄/MAS (1:1) erfolgt wie in Beispiel 1.
b) In einem zweiten Gefäß wird MPTS vorgelegt, dazu werden die gewünschten Mengen an DMDES, PVB-Lösung (30 gew.-%ig in Ethanol) und Triethylenglycol-di(2-ethylhexanoat) gemäß Tabelle 1 gegeben und 15 min bei 25°C gerührt. Dann gibt man 0,1 N HCl zu und rührt etwa 10 min bei Raumtemperatur, bis das anfangs trübe Reaktionsgemisch aufklart. Danach fügt man Zr(OPr)₄/MAS unter Rühren langsam mit einem Tropftrichter hinzu. Nach vollständiger Zugabe wird 4 h bei Raumtemperatur gerührt. Anschließend wird die benötigte Menge Wasser zugetropft und über Nacht bei Raumtemperatur gerührt.
c) Danach fügt man Crodamer^{®} UVA 421 zu. Nach weiteren 15 min erfolgt die Zugabe von Irgacure^{®} 819. Anschließend wird der Ansatz mit Isopropanol verdünnt und ein Verlaufsmittel (Byk^{®} 306) zugegeben. Man rührt bis zur vollständigen Durchmischung.

**TABELLE 1**

| | Beispiel 1 | | Beispiel 2 | | Beispiel 3 | |
|---|---|---|---|---|---|---|
| MPTS | 18,6 g | 0,075 mol | 24,8 g | 0,1 mol | 31,0 g | 0,125 mol |
| PVB-Lösung | 133,6 g | | 133,6 g | | 133,6 g | |
| TEG-di(2-ethylhexanoat) | 105,1 g | | 110,6 g | | 116,1 g | |
| DMDES | 11,1 g | 0,075 mol | 14,8 g | 0,1 mol | 18,5 g | 0,125 mol |
| 0,1 N HCl | 3,375 g | 0,1875 mol | 4,50 g | 0,25 mol | 5,6 g | 0,3125 mol |
| Zr(OⁿPr)₄/(MAS) | 41,6 g | | 41,6 g | | 41,6 g | |
| H₂O | 1,9 g | 0,11 mol | 1,9 g | 0,11 mol | 1,9 g | 0,11 mol |
| Crodamer UVA 421 | 6,41 g | | 6,75 g | | 7,08 g | |
| Irgacure 819 | 6,41 g | | 6,75 g | | 7,08 g | |
| Byk 306 | 6,15 g | | 6,5 g | | 6,8 g | |
| Isopropanol | 82,0 g | | 86,3 g | | 90,6 g | |
| Angle of view | 12° | | 12° | | 13° | |

| | | | | | | |
|---|---|---|---|---|---|---|
| TEG = Triethylenglycol DMDES = Dimethyldiethoxysilan | | | | | | |

### BEISPIELE 5 BIS 14

a) Die Herstellung von Zr(OPr)₄/MAS erfolgt wie in Beispiel 1 beschrieben.
b) In einem zweiten Gefäß wird MPTS vorgelegt. Dazu werden die gewünschten Mengen an DMDES, PVB-Lösung (30 gew.-%ig in Ethanol) und Isopropanol gegeben und 15 min bei 25°C gerührt. Dann gibt man die 0,1 N HCl hinzu und rührt etwa 10 min bei Raumtemperatur, bis das anfangs trübe Reaktionsgemisch aufklart. Danach fügt man die gewünschte Menge Zr(OPr)₄/MAS unter Rühren langsam mit einem Tropftrichter hinzu. Nach vollständiger Zugabe wird bei 4 h bei Raumtemperatur gerührt. Anschließend wird die benötigte Menge Wasser zugetropft und über Nacht bei Raumtemperatur gerührt.

Dann werden Irgacure® 819 und Byk® 306 zugegeben. Man rührt bis zur vollständigen Durchmischung (Basis-Lack). Anschließend erfolgt die Zugabe der Weichmacher und Sensibilisierungsmittel gemäß Tabelle 2.

**Basis-Lack**

| | | |
|---|---|---|
| MPTS | 139 g | 0,56 mol |
| PVB-Lösung | 601,2 g | |
| Isopropanol | 365,7 g | |
| DMDES | 82,9 g | 0,56 mol |
| 0,1 N HCl | 25,2 g | 1,41 mol |
| Zr(OPr)₄/(MAS) | 187,2 g | |
| H₂O | 8,46 g | 0,47 mol |
| Irgacure 819 | 15,8 g | |
| Byk 306 | 23,7 g | |

| | | |
|---|---|---|
| PVB: Mowital^{®} 30 HH und 650 HH (1:1) | | |

**TABELLE 2: Variation der Weichmacher und Sensibilisierungsmittel (Variation pro 100 g Ansatz)**

| Beispiel | Crodamer UVA 421 | Polyalkylenglycolacrylat | TEG-di(2-ethyl-hexanoat) | Angle of view |
|---|---|---|---|---|
| 5 | 0,7776 g | -- | 3,1104 g | 16° |
| 6 | 1,1664 g | -- | 3,1104 g | 16° |
| 7 | 1,5552 g | -- | 1,5552 g | 12° |
| 8 | 0,7776 g | 2,3328 g PPGDMA (570) | -- | 12° |
| 9 | 0,7776 g | 1,5552 g PEGDMA (330) | -- | 13° |
| 10 | 0,7776 g | 1,5552 g PEGDMA (330) | 0,7776 g | 13° |
| 11 | 0,7776 g | 2,3328 g PPGDA (540) | -- | 10° |
| 12 | 0,7776 g | 1,5552 g PEGDA (258) | 0,7776 g | 13° |
| 13 | -- | 1,5552 g PEGDMA (330) | 1,5552 g | 14° |
| 14 | -- | 0,7776 g PEGDMA (330) | 2,3328 g | 16° |

| | | | | |
|---|---|---|---|---|
| PPGDMA (570): Polypropylenglycoldimethacrylat (mittleres Molgewicht: 570 g/mol) PEGDMA (330): Polyethylenglycoldimethacrylat (mittleres Molgewicht: 330 g/mol) PPGDA (540): Polypropylenglycoldiacrylat (mittleres Molgewicht: 540 g/mol) PEGDA (258): Polyethylenglycoldiacrylat (mittleres Molgewicht: 258 g/mol) | | | | |

### BEISPIEL 15

In einem 2 l Dreihalskolben werden 592,2 g (1,81 mol) Zr(OPr)₄ vorgelegt und im Eisbad auf 10°C gekühlt. Dazu tropft man langsam unter Rühren 155,7 g (1,81 mol) MAS. Nach vollständiger Zugabe wird das Reaktionsgemisch nach 10 min aus dem Eisbad entfernt und anschließend bei 25°C gerührt.

In einem 10 l Reaktor werden 2312,1 g PVB (30 gew.-%ig in 2-Propanol) vorgelegt. Danach werden zuerst 2241,9 g (9,04 mol) MPTS und anschließend 1338 g (9,04 mol) Dimethyldiethoxysilan (DMDES) langsam hinzugegeben und 45 min bei 25°C homogenisiert. Anschließend erfolgt die Zugabe von 407 g 0,1 N HCl. Die Temperatur im Reaktor wird mittels Thermostat auf 40°C konstant gehalten. Nach Aufklaren des Reaktionsgemisches erfolgt die Zugabe von 748 g des oben hergestellten Zr(OPr)₄/MAS tropfenweise unter kräftigem Rühren bei 40°C. Nach vollständiger Zugabe rührt man das Reaktionsgemisch 4 Stunden bei 25°C. Danach werden 48,78 g (2,71 mol) Wasser zugegeben und weitere 16 h bei 25°C gerührt. Anschließend erfolgt die Zugabe von 260 g Hexandioldimethacrylat (HDDMA), 30 min Rühren bei 25°C und schließlich von 99 g Crodamer® UVA 421. Nach weiteren 30 min Rühren bei 25°C erfolgt die Zugabe von 99,5 g Irgacure® 819.

### BEISPIEL 16

Mittels Zwei-Wellenmischen werden phasenmodulierte Volumenhologramme sowohl als Transmissions- als auch als Reflexionshologramme erzeugt. Als kohärente Lichtquelle dient hier ein Argon-Ionen-Laser. Der Laserstrahl (20 mW/cm²) wird auf einen Durchmesser von ca. 0,5 mm fokussiert und durch einen Strahlenteiler in zwei Teilstrahlen gleicher Intensität geteilt. Die Interferenz dieser beiden Strahlen führt zu einer räumlich periodischen Änderung der Lichtintensität. Als holographische Material dient das Photo-Nanokompositmaterial aus Beispiel 1. Zur Schichtherstellung wird das Photo-Nanokomposit-Material auf ein Glassubstrat (10 cm x 10 cm x 0,25 cm) laminiert, mit einer Polyesterfolie abgedeckt und mit diesen Intensitätsmodulationen belichtet. Es baut sich eine Gitterstruktur auf, die die gleiche Periodizität besitzt wie die Intensitätsmodulation. Das Brechwertprofil wird eingefroren, indem einer der im Experiment verwendeten Schreibstrahlen abgeschirmt wird, um den verbleibenden Strahl zu einer Nachpolymerisation zu verwenden. Auf diese Weise werden Volumenhologramme mit einer Beugungseffizienz von 90% (Wellenlänge: 633 nm) erzeugt.

## Patentansprüche

1. Verfahren zur Herstellung von optischen Elementen mit Gradientenstruktur, insbesondere für holographische Anwendungen, planare Gradientenindexlinsen in der abbildenden Optik, Head-up-Displays, Head-down-Displays, Lichtwellenleiter und optische Datenspeicher, die in einer festen Matrix eingebettete nanoskalige Teilchen enthalten, wobei die Gradientenstruktur durch einen Konzentrationsgradienten der nanoskaligen Teilchen gebildet wird, **dadurch gekennzeichnet, dass** man in einem festen oder gelartigen Nanokompositmaterial mit einer dynamischen Viskosität bei 25°C von 2 bis 1000 Pas, bestehend aus einem härtbaren Matrixmaterial und darin dispergierten nanoskaligen Teilchen, eine Potentialdifferenz erzeugt, so dass eine gerichtete Diffusion der nanoskaligen Teilchen unter Bildung des Konzentrationsgradienten erfolgt, und das den Konzentrationsgradienten aufweisende Nanokompositmaterial härtet.

2. Verfahren nach Anspruch 1, **dadurch gekennzeichnet, dass** die Potentialdifferenz durch Anlegen eines elektrischen Feldes oder durch Unterschiede im chemischen Potential oder Grenzflächenpotential erzeugt wird.

3. Verfahren nach Anspruch 2, **dadurch gekennzeichnet, dass** die chemische Potentialdifferenz durch Belichtung, vorzugsweise mit UV-Licht oder Laserlicht, oder durch Elektronenbestrahlung erzeugt wird.

4. Verfahren nach einem der Ansprüche 1 bis 3, **dadurch gekennzeichnet, dass** die chemische Potentialdifferenz durch holographische oder lithographische Techniken erzeugt wird.

5. Verfahren nach einem der Ansprüche 1 bis 4, **dadurch gekennzeichnet, dass** das härtbare Matrixmaterial aus polymerisierbaren oder polykondensierbaren organischen Monomeren und/oder Oligomeren und/oder Prepolymeren und/oder hydrolysierbaren Silanen der allgemeinen Formel (I) und/oder (II) und/oder davon abgeleiteten Vorkondensaten hergestellt wird:
SiX₄ (I)
in der die Reste X gleich oder verschieden sind und hydrolysierbare Gruppen oder Hydroxylgruppen bedeuten,
RₐSiX₍₄₋ₐ₎ (II)
worin R gleich oder verschieden ist und einen nicht hydrolysierbaren Rest darstellt, der gegebenenfalls eine polymerisierbare oder polykondensierbare Gruppe aufweist, X die vorstehende Bedeutung hat und a den Wert 1, 2 oder 3 hat.

6. Verfahren nach einem der Ansprüche 1 bis 5, **dadurch gekennzeichnet, dass** das feste oder gelartige Nanokompositmaterial ein Kondensat aus einem oder mehreren hydrolysierbaren und kondensierbaren Silanen und/oder ein organisches Polymer umfasst.

7. Verfahren nach einem der Ansprüche 1 bis 6, **dadurch gekennzeichnet, dass** das feste oder gelartige Nanokompositmaterial, bezogen auf das Gesamttrockengewicht, folgende Komponenten enthält:
a) 4,9 bis 95,9 Gew.-% mindestens eines organischen Polymers,
b) 4 bis 95 Gew.-% eines Kondensats aus einem oder mehreren hydrolysierbaren und kondensierbaren Silanen, wobei gegebenenfalls mindestens ein Silan einen nicht hydrolysierbaren Rest, der polymerisierbar oder polykondensierbar ist, aufweist und wobei der anorganische Kondensationsgrad 33 bis 100 % und der organische Polymerisations- oder Polykondensationsgrad 0 bis 95 % beträgt,
c) 0,1 bis 50 Gew.-% einer oder mehrerer Arten von gegebenenfalls oberflächenmodifizierten nanoskaligen Teilchen aus der Gruppe der Oxide, Sulfide, Selenide, Telluride, Halogenide, Carbide, Arsenide, Antimonide, Nitride, Phosphide, Carbonate, Carboxylate, Phosphate, Sulfate, Silicate, Titanate, Zirkonate, Stannate, Plumbate, Aluminate und entsprechenden Mischoxide, bevorzugt SiO₂, TiO₂, ZrO₂ und Ta₂O₅,
d) 0 bis 60 Gew.-% eines oder mehrerer organischer Monomere, insbesondere Acrylatmonomere, bevorzugt Methylmethacrylat oder ein Dioldiacrylat oder -methacrylat,
e) 0 bis 50 Gew.-% eines oder mehrerer Weichmacher und
f) 0 bis 5 Gew.-% eines oder mehrerer Additive ausgewählt aus thermischen oder photochemischen Vernetzungsinitiatoren, Sensibilisierungsmitteln, Netzhilfsmitteln, Haftvermittlern, Verlaufsmitteln, Antioxidationsmitteln, Stabilisatoren, Farbstoffen, photochromen oder thermochromen Verbindungen.

8. Verfahren nach Anspruch 6 oder 7, **dadurch gekennzeichnet, dass** ein Polyacrylat, Polymethacrylat, Polyepoxid, Polyvinylalkohol, Polyvinylacetat oder Polyvinylbutyral als organisches Polymer verwendet wird.

9. Verfahren nach einem der Ansprüche 5 bis 8, **dadurch gekennzeichnet, dass** das oder die Silane aus Methacryloxypropyltrimethoxsilan, Acryloxypropyltrimethoxysilan, 3-Glycidyloxypropyltrimethoxysilan, Vinyltriethoxysilan, Dimethyldimethoxysilan, Dimethyldiethoxysilan und Methyltriethoxysilan ausgewählt werden.

10. Verfahren nach einem der Ansprüche 7 bis 9, **dadurch gekennzeichnet, dass** die oberflächenmodifizierten nanoskaligen Teilchen polymerisierbare oder polykondensierbare Oberflächengruppen, insbesondere (Meth)acryl-, Allyl-, Vinyl-, Epoxy-, Hydroxy-, Carboxy- oder Aminogruppen, aufweisen.

11. Verfahren nach irgendeinem der Ansprüche 1 bis 10, **dadurch gekennzeichnet, dass** die nanoskaligen Teilchen einen Durchmesser von nicht mehr als 50 nm, vorzugsweise nicht mehr als 20 nm, aufweisen.

12. Verfahren nach einem der Ansprüche 1 bis 11, **dadurch gekennzeichnet, dass** man das feste oder gelartige Nanokompositmaterial oder eine flüssige Vorstufe davon zu einem Formkörper formt oder auf ein Substrat aufträgt, die flüssige Vorstufe, wenn verwendet, in die feste oder gelartige Form überführt und das feste oder gelartige Nanokompositmaterial nach Aufbau des Konzentrationsgradienten thermisch und/oder photochemisch härtet.

## Claims

1. Process for producing optical elements with a gradient structure, in particular for holographic applications, planar gradient index lenses in imaging optics, head-up displays, head-down displays, optical waveguides, and optical data storage media, which comprise nanoscale particles embedded in a solid matrix, the gradient structure being formed by a concentration gradient of the nanoscale particles, **characterized in that** a potential difference is generated in a solid or gel-like nanocomposite material having a dynamic viscosity at 25°C of from 2 to 1000 Pas, consisting of a curable matrix material and nanoscale particles dispersed therein, so that there is directed diffusion of the nanoscale particles, with the formation of the concentration gradient, and the nanocomposite material comprising the concentration gradient is cured.

2. Process according to Claim 1, **characterized in that** the potential difference is generated by applying an electrical field or by differences in the chemical potential or interface potential.

3. Process according to Claim 2, **characterized in that** the chemical potential difference is generated by exposure to light, preferably with UV light or laser light, or by electron beam irradiation.

4. Process according to one of Claims 1 to 3, **characterized in that** the chemical potential difference is generated by holographic or lithographic techniques.

5. Process according to one of Claims 1 to 4, **characterized in that** the curable matrix material is prepared from addition-polymerizable or polycondensable organic monomers and/or oligomers and/or prepolymers and/or hydrolysable silanes of the general formula (I) and/or (II) and/or precondensates derived therefrom:
SiX₄ (I)
in which the radicals X are identical or different and are hydrolysable groups or hydroxyl groups;
RₐSix₍₄₋ₐ₎ (II)
in which each R is identical or different and is a non-hydrolysable radical which if desired carries an addition-polymerizable or polycondensable group, X is as defined above and a has the value 1, 2 or 3.

6. Process according to one of Claims 1 to 5, **characterized in that** the solid or gel-like nanocomposite material comprises a condensate of one or more hydrolysable and condensable silanes and/or an organic polymer.

7. Process according to one of Claims 1 to 6, **characterized in that** the solid or gel-like nanocomposite material, based on the total dry weight, comprises the following components:
a) from 4.9 to 95.9% by weight of at least one organic polymer, .
b) from 4 to 95% by weight of a condensate of one or more hydrolysable and condensable silanes, with at least one silane having, where appropriate, a non-hydrolysable radical which is addition-polymerizable or polycondensable, the inorganic degree of condensation being from 33 to 100% and the organic degree of addition polymerization or polycondensation being from 0 to 95%,
c) from 0.1 to 50% by weight of one or more kinds of unmodified or surface-modified nanoscale particles from the group consisting of oxides, sulphides, selenides, tellurides, halides, carbides, arsenides, antimonides, nitrides, phosphides, carbonates, carboxylates, phosphates, sulphates, silicates, titanates, zirconates, stannates, plumbates, aluminates and corresponding mixed oxides, preferably SiO₂, TiO₂, ZrO₂ and Ta₂O₅,
d) from 0 to 60% by weight of one or more organic monomers, especially acrylate monomers, preferably methyl methacrylate or a diol diacrylate or -methacrylate,
e) from 0 to 50% by weight of one or more plasticizers and
f) from 0 to 5% by weight of one or more additives selected from thermal or photochemical crosslinking initiators, sensitizers, wetting assistants, adhesion promoters, levelling agents, antioxidants, stabilizers, dyes, photochromic or thermochromic compounds.

8. Process according to Claim 6 or 7, **characterized in that** a polyacrylate, polymethacrylate, polyepoxide, polyvinyl alcohol, polyvinyl acetate or polyvinyl butyral is used as organic polymer.

9. Process according to one of Claims 5 to 8, **characterized in that** the silane or silanes is or are selected from methacryloyloxypropyltrimethoxysilane, acryloyloxypropyltrimethoxysilane, 3-glycidyloxypropyltrimethoxysilane, vinyltriethoxysilane, dimethyldimethoxysilane, dimethyldioxysilane and methyltriethoxysilane.

10. Process according to one of Claims 7 to 9, **characterized in that** the surface-modified nanoscale particles have addition-polymerizable or polycondensable surface groups, especially (meth)acryloyl, allyl, vinyl, epoxy, hydroxyl, carboxyl or amino groups.

11. Process according to one of Claims 1 to 10, **characterized in that** the nanoscale particles have a diameter of not more than 50 nm, preferably not more than 20 nm.

12. Process according to one of Claims 1 to 11, **characterized in that** the solid or gel-like nanocomposite material or a liquid precursor thereof is moulded to form a moulding or applied to a substrate, the liquid precursor, if used, is converted into the solid or gel-like form and the solid or gel-like nanocomposite material, following construction of the concentration gradient, is thermally and/or photochemically cured.

## Revendications

1. Procédé de production d'éléments optiques présentant une structure à gradient, en particulier pour des applications holographiques, des lentilles à gradient d'indice pour l'optique de formation d'image, des affichages tête haute, des affichages tête basse, des conducteurs d'ondes lumineuses et des mémoires optiques de données, qui contient des nanoparticules incorporées dans une matrice solide, la structure à gradient étant formée par un gradient de concentration des nanoparticules,
**caractérisé en ce que**
une différence de potentiel est établie dans un matériau nanocomposite solide ou de type gel dont la viscosité dynamique à 25°C est de 2 à 1 000 Pa.s et constitué d'un matériau de matrice durcissable dans lequel sont dispersées des nanoparticules, de manière à obtenir une diffusion orientée des nanoparticules avec formation du gradient de concentration et
**en ce que** le matériau nanocomposite présentant le gradient de concentration est amené à durcir.

2. Procédé selon la revendication 1, **caractérisé en ce que** la différence de potentiel est établie en appliquant un champ électrique ou une différence de potentiel chimique ou de potentiel de surface.

3. Procédé selon la revendication 2, **caractérisé en ce que** la différence de potentiel chimique est établie par éclairage, de préférence par de la lumière UV ou de la lumière laser, ou par irradiation par électrons.

4. Procédé selon l'une des revendications 1 à 3, **caractérisé en ce que** la différence de potentiel chimique est établie par des techniques holographiques ou lithographiques.

5. Procédé selon l'une des revendications 1 à 4, **caractérisé en ce que** le matériau de matrice durcissable est produit à partir de monomères, oligomères et/ou prépolymères organiques polymérisables ou polycondensables, à partir de silanes hydrolysables de formule générale (I) et/ou (II) et/ou à partir de pré-condensats qui en dérivent, avec :
SiX₄ (I)
dans laquelle X représente des groupes identiques et différents qui sont des groupes hydrolysables ou des groupes hydroxyle,
RₐSiX₍₄₋ₐ₎ (II)
dans laquelle R représente des groupes identiques ou différents qui sont des groupes non hydrolysables qui présentent éventuellement un groupe polymérisable ou polycondensable, X ayant la signification donnée plus haut et a ayant la valeur 1, 2 ou 3.

6. Procédé selon l'une des revendications 1 à 5, **caractérisé en ce que** le matériau nanocomposite solide ou de type gel comporte un condensat constitué d'un ou de plusieurs silanes hydrolysables et condensables et/ou un polymère organique.

7. Procédé selon l'une des revendications 1 à 6, **caractérisé en ce que** le matériau nanocomposite solide ou de type gel contient par rapport à son poids sec total les composants suivants :
a) de 4,9 à 95,9 % en poids d'au moins un polymère organique,
b) de 4 à 95 % en poids d'un condensat d'un ou de plusieurs silanes hydrolysables et condensables, au moins un silane présentant un groupe non hydrolysable qui est polymérisable ou polycondensable, le taux de condensation minérale étant de 33 à 100 % et le taux de polymérisation ou de polycondensation organique étant de 0 à 95 %,
c) de 0,1 à 50 % en poids d'un ou de plusieurs types de nanoparticules, éventuellement à surface modifiée, sélectionnés dans l'ensemble constitué des oxydes, sulfures, séléniures, tellurures, halogénures, carbures, arséniures, antimoniures, nitrures, phosphures, carbonates, carboxylates, phosphates, sulfates, silicates, titanates, zirconates, stannates, plombates, aluminates et oxydes mixtes correspondants, de préférence SiO₂, TiO₂, ZrO₂ et Ta₂O₅,
d) de 0 à 60 % en poids d'un ou plusieurs monomères organiques, en particulier des monomères d'acrylate et de préférence le méthacrylate de méthyle ou un diacrylate ou méthacrylate de diol,
e) de 0 à 50 % en poids d'un ou plusieurs plastifiants et
f) de 0 à 5 % en poids d'un ou plusieurs additifs sélectionnés parmi les initiateurs thermiques et photochimiques de réticulation, les agents de sensibilisation, les agents auxiliaires de réticulation, les agents de renforcement de l'adhérence, les agents d'écoulement, les agents antioxydants, les stabilisants, les colorants et les composés photochromes ou thermochromes.

8. Procédé selon les revendications 6 ou 7, **caractérisé en ce qu'**il utilise comme polymère organique un polyacrylate, un polyméthacrylate, un polyépoxy, un poly(alcool vinylique), un poly(acétate de vinyle) ou un polyvinylbutyral.

9. Procédé selon l'une des revendications 5 à 8, **caractérisé en ce que** le ou les silanes sont sélectionnés parmi le méthacryloxypropyltriméthoxysilane, l'acryloxypropyltriméthoxysilane, le 3-glycidyloxypropyltriméthoxysilane, le vinyltriéthoxysilane, le diméthyldiméthoxysilane, le diméthyldiéthoxysilane et le méthyltriéthoxysilane.

10. Procédé selon l'une des revendications 7 à 9, **caractérisé en ce que** les nanoparticules à surface modifiée présentent des groupes de surface polymérisables ou polycondensables, notamment des groupes méthacryle, allyle, vinyle, époxy, hydroxy, carboxy ou amino.

11. Procédé selon l'une quelconque des revendications 1 à 10, **caractérisé en ce que** les nanoparticules ont un diamètre non supérieur à 50 nm et de préférence non supérieur à 20 nm.

12. Procédé selon l'une des revendications 1 à 11, **caractérisé en ce que** le matériau nanocomposite solide ou de type gel ou un précurseur liquide de ce matériau est moulé en un corps moulé ou est appliqué sur un substrat et **en ce que** le précurseur liquide éventuellement utilisé est amené sous forme solide ou gélifiée, le matériau nanocomposite solide ou de type gel étant durci par voie thermique et/ou photochimique après établissement du gradient de concentration.
